(19) Europäisches Patentamt
European Patent Office
Office européen des brevets

(11) **EP 2 634 939 A2**

(12) **EUROPEAN PATENT APPLICATION**
published in accordance with Art. 153(4) EPC

(43) Date of publication:
**04.09.2013 Bulletin 2013/36**

(51) Int Cl.:
*H04J 11/00* (2006.01)    *H04B 7/26* (2006.01)
*H04L 1/18* (2006.01)    *H04W 88/02* (2009.01)

(21) Application number: **11836670.7**

(22) Date of filing: **28.10.2011**

(86) International application number:
**PCT/KR2011/008161**

(87) International publication number:
**WO 2012/057578 (03.05.2012 Gazette 2012/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.01.2011   US 201161430185 P
03.11.2010   US 409543 P
01.11.2010   US 409066 P
28.10.2010   US 407894 P**

(71) Applicant: **LG Electronics Inc.
Yeongdeungpo-gu
Seoul 150-721 (KR)**

(72) Inventors:
• **SEO, Dong Youn
Anyang-si
Gyeonggi-do 431-749 (KR)**

• **KIM, Min Gyu
Anyang-si
Gyeonggi-do 431-749 (KR)**
• **YANG, Suck Chel
Anyang-si
Gyeonggi-do 431-749 (KR)**
• **AHN, Joon Kui
Anyang-si
Gyeonggi-do 431-749 (KR)**

(74) Representative: **Katérle, Axel
Wuesthoff & Wuesthoff
Patent- und Rechtsanwälte
Schweigerstraße 2
81541 München (DE)**

(54) **METHOD AND APPARATUS FOR TRANSMITTING A SOUNDING REFERENCE SIGNAL**

(57)    Provided are a method and apparatus for transmitting a sounding reference signal. A terminal receives, from a base station, a configuration for periodic channel quality indicator (CQI) transmission and a configuration for sound reference signal (SRS) transmission. When a positive SRS request is detected, the terminal determines an SRS subframe winch satisfies the configuration for SRS transmission. When the periodically transmitted CQI is triggered in the SRS subframe, the terminal transmits the SRS in the SRS subframe to the base station.

FIG. 8

**Description**

**BACKGROUND OF THE INVENTION**

Field of the invention

The present invention relates to wireless communications, and more particularly, to a method and apparatus for transmitting a sounding reference signal in a wireless communication system.

Related Art

Long term evolution (LTE) based on 3rd generation partnership project (3GPP) technical specification (TS) release 8 is a promising next-generation mobile communication standard.

As disclosed in 3GPP TS 36.211 V8.7.0 (2009-05) "Evolved Universal Terrestrial Radio Access (E-UTRA); Physical Channels and Modulation (Release 8)", a physical channel of the LTE can be classified into a downlink channel, i.e., a physical downlink shared channel (PDSCH) and a physical downlink control channel (PDCCH), and an uplink channel, i.e., a physical uplink shared channel (PUSCH) and a physical uplink control channel (PUCCH).

The PUCCH is an uplink control channel used for transmission of an uplink control signal such as a hybrid automatic repeat request (HARQ) positive-acknowledgement (ACK)/negative-acknowledgement (NACK) signal, a channel quality indicator (CQI), and a scheduling request (SR).

An uplink reference signal can be classified into a demodulation reference signal (DMRS) and a sounding reference signal (SRS). The DMRS is a reference signal used in channel estimation for demodulation of a received signal. The SRS is a reference signal transmitted for uplink scheduling by a user equipment to a base station. The base station estimates an uplink channel by using the received SRS, and the estimated uplink channel is used in uplink scheduling.

An uplink control signal and an SRS can be allocated simultaneously in the same duration. Simultaneous transmission of the uplink control signal and the SRS may cause an increase in battery consumption by deteriorating a peak-to-average power ratio (PAPR) property of the user equipment.

There is a need for a method of scheduling SRS transmission when SRS transmission is triggered together with uplink control signal transmission.

**SUMMARY OF THE INVENTION**

The present invention provides a method and apparatus for transmitting an aperiodic sounding reference signal.

In an aspect, a method of transmitting a sounding reference signal in a wireless communication system is provided. The method includes receiving, by a user equipment, a configuration for periodic channel quality indicator (CQI) transmission from a base station, receiving, by the user equipment, a configuration for sounding reference signal (SRS) transmission from the base station, monitoring, by the user equipment, a physical downlink control channel (PDCCH) in order to detect a positive SRS request, upon detecting the positive SRS request, determining a SRS subframe which satisfies the configuration for SRS transmission, and if a periodic CQI is also triggered in the SRS subframe, transmitting a SRS in the SRS subframe to the base station.

The periodic CQI may not be transmitted in the SRS subframe.

The configuration for SRS transmission includes a SRS periodicity and a SRS subframe offset, and the configuration for periodic CQI transmission includes a CQI periodicity and a CQI subframe offset.

The SRS subframe may be determined as a first subframe which satisfies the configuration for SRS transmission and n+k, where k ≥ 4, when the positive SRS request is detected in a subframe n.

The periodic CQI may not be multiplexed with a hybrid automatic repeat request (HARQ) ACK/NACK.

The periodic CQI may be transmitted on a physical uplink control channel (PUCCH).

The method may further include transmitting a multiplexed CQI in the SRS subframe to the base station if a periodic CQI multiplexed with the HARQ ACK/NACK is triggered in the SRS subframe.

The multiplexed CQI may be transmitted on a PUCCH.

In another aspect, a user equipment configured for transmitting a sounding reference signal in a wireless communication system is provided. The user equipment includes a radio frequency unit configured to transmit a radio signal and a processor operatively coupled with the radio frequency unit and configured to receive a configuration for periodic channel quality indicator (CQI) transmission from a base station, receive a configuration for sounding reference signal (SRS) transmission from the base station, monitor a physical downlink control channel (PDCCH) in order to detect a positive SRS request, upon detecting the positive SRS request, determine a SRS subframe which satisfies the configuration for SRS transmission, and if a periodic CQI is also triggered in the SRS subframe, transmit a SRS in the SRS subframe to the base station.

A method of transmitting a sounding reference signal is provided when an aperiodic sounding reference signal is triggered together with another uplink transmission. Therefore, a base station can more correctly perform uplink scheduling.

## BRIEF DESCRIPTION OF THE DRAWINGS

FIG. 1 shows a downlink radio frame structure in 3rd generation partnership project (3GPP) long term evolution (LTE).

FIG. 2 shows an example of an uplink subframe in 3GPP LTE.

FIG. 3 shows an example of multiple carriers.

FIG. 4 shows an example of aperiodic sounding reference signal (SRS) transmission.

FIG. 5 shows an example of transmission of an SRS and a physical uplink shared channel (PUSCH).

FIG. 6 shows an example of resolving a collision of an SRS and a channel quality indicator (CQI).

FIG. 7 shows another example of resolving a collision of an SRS and a CQI.

FIG. 8 is a flowchart showing an SRS transmission method according to the embodiment of FIG. 7.

FIG. 9 is a block diagram showing a wireless communication system to implement embodiments of the present invention.

## DESCRIPTION OF EXEMPLARY EMBODIMENTS

A user equipment (UE) may be fixed or mobile, and may be referred to as another terminology, such as a mobile station (MS), a mobile terminal (MT), a user terminal (UT), a subscriber station (SS), a wireless device, a personal digital assistant (PDA), a wireless modem, a handheld device, etc.

A base station (BS) is generally a fixed station that communicates with the UE and may be referred to as another terminology, such as an evolved node-B (eNB), a base transceiver system (BTS), an access point, etc.

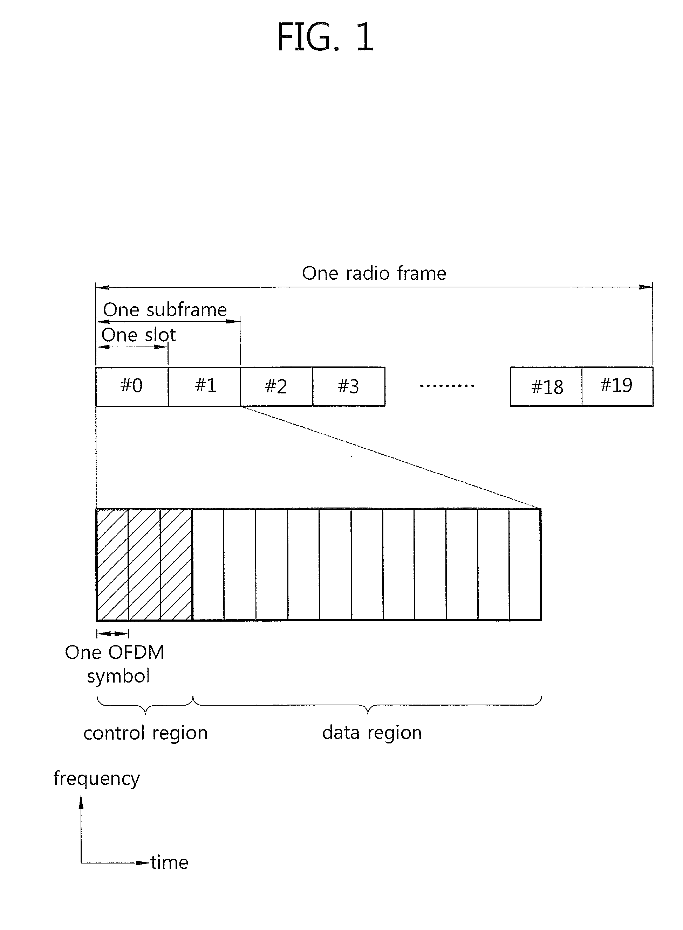

FIG. 1 shows a downlink radio frame structure in 3rd generation partnership project (3GPP) long term evolution (LTE). The section 6 of 3GPP TS 36.211 V8.7.0 (2009-05) "Evolved Universal Terrestrial Radio Access (E-UTRA); Physical Channels and Modulation (Release 8)" may be incorporated herein by reference.

A radio frame consists of 20 slots indexed with 0 to 19. One subframe consists of 2 slots. A time required for transmitting one subframe is defined as a transmission time interval (TTI). For example, one subframe may have a length of 1 millisecond (ms), and one slot may have a length of 0.5 ms.

One slot may include a plurality of orthogonal frequency division multiplexing (OFDM) symbols in a time domain. Since the 3GPP LTE uses orthogonal frequency division multiple access (OFDMA) in a downlink (DL), the OFDM symbol is only for expressing one symbol period in the time domain, and there is no limitation in a multiple access scheme or terminologies. For example, the OFDM symbol may also be referred to as another terminology such as a single carrier frequency division multiple access (SC-FDMA) symbol, a symbol period, etc.

Although it is described that one slot includes 7 OFDM symbols for example, the number of OFDM symbols included in one slot may vary depending on a length of a cyclic prefix (CP). According to 3GPP TS 36.211 V8.7.0, in case of a normal CP, one slot includes 7 OFDM symbols, and in case of an extended CP, one slot includes 6 OFDM symbols.

A resource block (RB) is a resource allocation unit, and includes a plurality of subcarriers in one slot. For example, if one slot includes 7 OFDM symbols in a time domain and the RB includes 12 subcarriers in a frequency domain, one RB can include $7 \times 12$ resource elements (REs).

A DL subframe is divided into a control region and a data region in the time domain. The control region includes up to three preceding OFDM symbols of a 1st slot in the subframe. However, the number of OFDM symbols included in the control region may vary. A physical downlink control channel (PDCCH) is allocated to the control region, and a physical downlink shared channel (PDSCH) is allocated to the data region.

As disclosed in 3GPP TS 36.211 V8.7.0, the 3GPP LTE classifies a physical channel into a data channel and a control channel. Examples of the data channel include a physical downlink shared channel (PDSCH) and a physical uplink shared channel (PUSCH). Examples of the control channel include a physical downlink control channel (PDCCH), a physical control format indicator channel (PCFICH), a physical hybrid-ARQ indicator channel (PHICH), and a physical uplink control channel (PUCCH).

The PCFICH transmitted in a 1st OFDM symbol of the subframe carries a control format indicator (CFI) regarding the number of OFDM symbols (i.e., a size of the control region) used for transmission of control channels in the subframe. The UE first receives the CFI through the PCFICH, and thereafter monitors the PDCCH.

Unlike the PDCCH, the PCFICH does not use blind decoding, and is transmitted by using a fixed PCFICH resource of the subframe.

The PHICH carries a positive-acknowledgement (ACK)/negative-acknowledgement (NACK) signal for an uplink hybrid automatic repeat request (HARQ). The ACK/NACK signal for uplink (UL) data on a PUSCH transmitted by the UE is transmitted on the PHICH.

A physical broadcast channel (PBCH) is transmitted in first four OFDM symbols in a $2^{nd}$ slot of a $1^{st}$ subframe of a radio frame. The PBCH carries system information necessary for communication between a UE and a BS. The system information transmitted through the PBCH is referred to as a master information block (MIB). In comparison thereto, system information transmitted through the PDCCH is referred to as a system information block (SIB).

Control information transmitted through the PDCCH is referred to as downlink control information (DCI). The DCI may include resource allocation of the PDSCH (this is referred to as a DL grant), resource allocation of a PUSCH (this is referred to as a UL grant), a set of transmit power control commands for individual UEs in any UE group and/or activation of a voice over Internet protocol (VoIP).

The 3GPP LTE uses blind decoding for PDCCH detection. The blind decoding is a scheme in which a desired identifier is de-masked from a CRC of a received PDCCH (referred to as a candidate PDCCH) to determine whether the PDCCH is its own control channel by performing CRC error checking.

The BS determines a PDCCH format according to DCI to be transmitted to the UE, attaches a cyclic redundancy check (CRC) to the DCI, and masks a unique identifier (referred to as a radio network temporary identifier (RNTI)) to the CRC according to an owner or usage of the PDCCH.

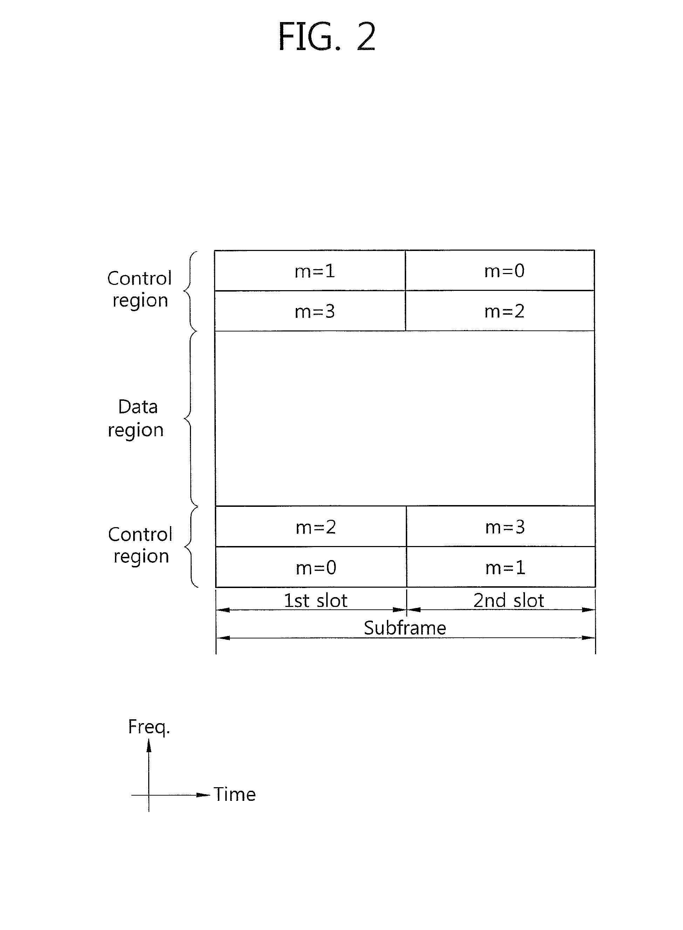

FIG. 2 shows an example of a UL subframe in the 3GPP LTE.

The UL subframe can be divided into a control region and a data region. The control region is a region to which a physical uplink control channel (PUCCH) carrying UL control information is assigned. The data region is a region to which a physical uplink shared channel (PUSCH) carrying user data is assigned.

The PUCCH is allocated in an RB pair in a subframe. RBs belonging to the RB pair occupy different subcarriers in each of a $1^{st}$ slot and a $2^{nd}$ slot. m is a location index indicating a logical frequency-domain location of the RB pair allocated to the PUCCH in the subframe. It shows that RBs having the same value m occupy different subcarriers in the two slots.

According to 3GPP TS 36.211 V8.7.0, the PUCCH supports multiple formats. A PUCCH having a different number of bits per subframe can be used according to a modulation scheme which is dependent on the PUCCH format.

Table 1 below shows an example of a modulation scheme and the number of bits per subframe according to the PUCCH format.

[Table 1]

| PUCCH Format | Modulation Scheme | Number of Bits per subframe |
|---|---|---|
| 1 | N/A | N/A |
| 1a | BPSK | 1 |
| 1b | QPSK | 2 |
| 2 | QPSK | 20 |
| 2a | QPSK+BPSK | 21 |
| 2b | QPSK+BPSK | 22 |

The PUCCH format 1 is used for transmission of a scheduling request (SR). The PUCCH formats 1a/1b are used for transmission of an ACK/NACK signal. The PUCCH format 2 is used for transmission of a CQI. The PUCCH formats 2a/2b are used for simultaneous transmission of the CQI and the ACK/NACK signal. When only the ACK/NACK signal is transmitted in a subframe, the PUCCH formats 1a/1b are used. When the SR is transmitted alone, the PUCCH format 1 is used. When the SR and the ACK/NACK are simultaneously transmitted, the PUCCH format 1 is used, and in this transmission, the ACK/NACK signal is modulated by using a resource allocated to the SR.

Now, a multiple-carrier system will be described.

A 3GPP LTE system supports a case where a DL bandwidth and a UL bandwidth are set differently only under the assumption that one component carrier (CC) is used. The 3GPP LTE system supports up to 20MHz. The UL bandwidth can be different from the DL bandwidth, but only one CC is supported in each of UL and DL cases.

Spectrum aggregation (or bandwidth aggregation, also referred to as carrier aggregation) supports a plurality of CCs. For example, if 5 CCs are assigned as a granularity of a carrier unit having a bandwidth of 20MHz, a bandwidth of up to 100MHz can be supported.

A CC or a CC-pair can correspond to one cell. When a synchronization signal and a PBCH are transmitted in each CC, one DL CC may correspond to one cell. Therefore, a UE which communicates with a BS through a plurality of CCs may receive a service from a plurality of serving cells.

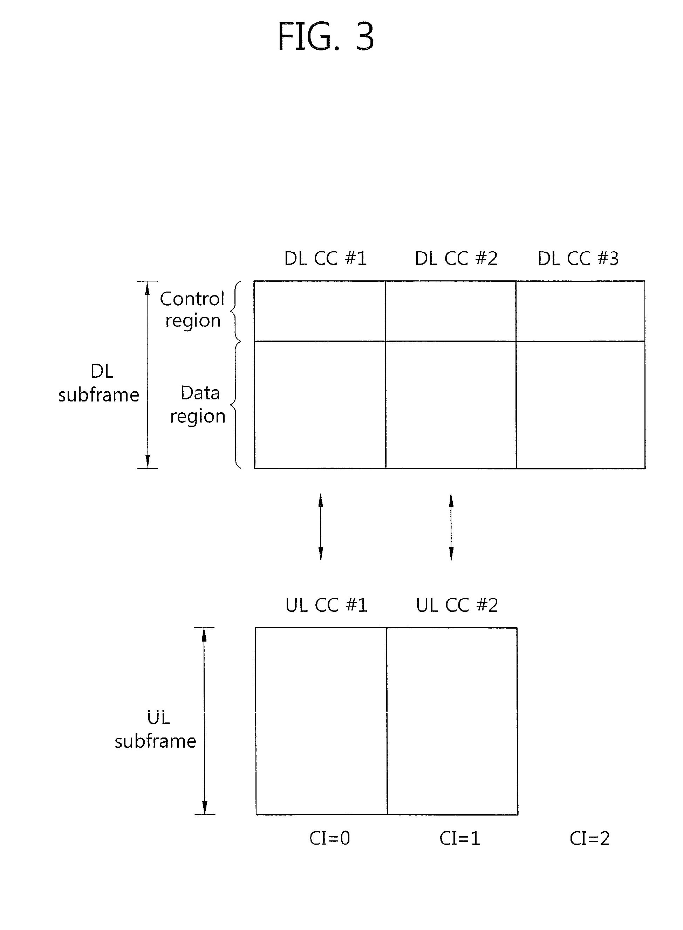

FIG. 3 shows an example of multiple carriers.

Although 3 DL CCs and 3 UL CCs are shown herein, the number of DL CCs and the number of UL CCs are not limited thereto. In each DL CC, a PDCCH and a PDSCH are independently transmitted. In each UL CC, a PUCCH and a PUSCH are independently transmitted. Since three DL CC-UL CC pairs are defined, it can be said that a UE receives a service from three serving cells.

The UE can monitor the PDCCH in a plurality of DL CCs, and can receive a DL transport block simultaneously through the plurality of DL CC. The UE can transmit a plurality of UL transport blocks simultaneously through a plurality of UL CCs.

It is assumed that a pair of a DL CC #1 and a UL CC #1 is a 1st serving cell, a pair of a DL CC #2 and a UL CC #2 is a 2nd serving cell, and a DL CC #3 is a 3rd serving cell. Each serving cell can be identified by using a cell index (CI). The CI may be cell-specific or UE-specific. Herein, CI=0, 1, 2 are assigned to the 1st to 3rd serving cells for example.

The serving cell can be classified into a primary cell and a secondary cell. The primary cell operates in a primary frequency, and is a cell designated as the primary cell when a UE performs an initial network entry process or starts a network re-entry process or performs a handover process. The primary cell is also called a reference cell. The secondary cell operates in a secondary frequency. The secondary cell can be configured after an RRC connection is established, and can be used to provide an additional radio resource. At least one primary cell is configured always. The secondary cell can be added/modified/released by higher-layer signaling (e.g., RRC messages).

The CI of the primary cell may be fixed. For example, a lowest CI can be designated as a CI of the primary cell. It is assumed hereinafter that the CI of the primary cell is 0 and a CI of the secondary cell is allocated sequentially starting from 1.

Now, sounding reference signal (SRS) transmission will be described.

The SRS transmission can be classified into periodic SRS transmission and aperiodic SRS transmission. The periodic SRS transmission is when transmission is performed in a subframe triggered by a periodic SRS configuration. The periodic SRS configuration includes an SRS periodicity and an SRS subframe offset. If the periodic SRS configuration is given, a UE can periodically transmit an SRS in a subframe satisfying the periodic SRS configuration.

In the aperiodic SRS transmission, the SRS is transmitted upon detection of an SRS request of a BS. For the aperiodic SRS transmission, the SRS configuration is given in advance. The SRS configuration also includes an SRS periodicity $T_{SRS}$ and an SRS subframe offset $T_{Offset}$.

The SRS request for triggering of the aperiodic SRS transmission may be included in a DL grant or a UL grant on a PDCCH. For example, if the SRS request is 1 bit, '0' may indicate a negative SRS request, and '1' may indicate a positive SRS request. If the SRS request is 2 bits, '00' may indicate a negative SRS request, and the others may indicate a positive SRS request. In this case, one of a plurality of SRS configurations for SRS transmission can be selected.

If the DL grant or the UL grant does not include a CI, an SRS can be transmitted in a serving cell of a PDCCH in which an SRS request is detected. If the DL grant or the UL grant includes the CI, the SRS can be transmitted in a serving cell indicated by the CI.

Assume that a positive SRS request is detected in a subframe n of a serving cell. Upon detection of the positive SRS request, an SRS is transmitted in a first subframe satisfying a condition of n+k where k≥4 as well as $T_{SRS}>2$ in time division duplex (TDD) and $(10 \cdot n_f + k_{SRS} - T_{offset}) \mod T_{SRS} = 0$ in frequency division duplex (FDD). In FDD, a subframe index $K_{SRS}$ is {0,1,..,9} in a frame $n_f$. In TDD, $k_{SRS}$ is defined by a predetermined table. In TDD of $T_{SRS}=2$, the SRS is transmitted in a first subframe satisfying a condition of $(k_{SRS} - T_{offset}) \mod 5 = 0$.

Hereinafter, a subframe in which the SRS is transmitted is called an SRS subframe or a triggered subframe. In periodic SRS transmission and aperiodic SRS transmission, the SRS can be determined in an SRS subframe determined UE-specifically.

An OFDM symbol in which the SRS is transmitted may have a fixed position in the SRS subframe. For example, the SRS may be transmitted in a last OFDM symbol of the SRS subframe. The OFDM symbol in which the SRS is transmitted is called a sounding reference symbol.

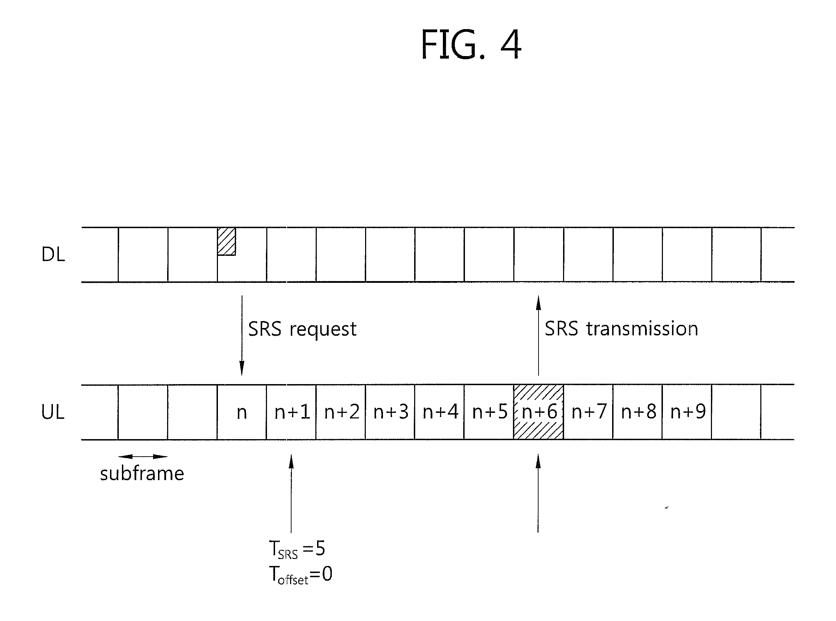

FIG. 4 shows an example of aperiodic SRS transmission. It is assumed that an SRS configuration includes an SRS periodicity $T_{SRS}=5$ and an SRS subframe offset $T_{offset}=0$.

It is assumed that a subframe capable of transmitting an SRS is a subframe n+1 and a subframe n+6 according to the SRS configuration.

If an SRS request is detected on a PDCCH of a subframe n, the SRS is transmitted in the subframe n+6 which is a first subframe satisfying the SRS configuration after a subframe n+4.

Now, the proposed multiplexing of an SRS and a PUCCH will be described.

An uplink control signal transmitted on a PUCCH includes at least one of a scheduling request (SR), an ACK/ NACK for HARQ, and a CQI. When the SRS is triggered in the same serving cell or in a subframe having the same uplink control signal in different serving cells, the following operation method is proposed.

<First embodiment: Transmission of SRS and PUCCH>

An SRS and a PUCCH can be transmitted simultaneously in the same subframe. For example, the PUCCH can be transmitted in a primary cell, and the SRS can be transmitted in a secondary cell.

When the PUCCH and the SRS are transmitted simultaneously, it may be required to regulate transmit power. This is because total transmit power of the PUCCH and the SRS can exceed maximum transmit power. This can be expressed by the following equation.

[Equation 1]

$$\{\, w_1(i)P_{PUCCH,c}(i) + w_2(i) \sum_c P_{SRS,c}(i)\, \} \le P_{CMAX,c}(i)$$

Herein, $P_{PUCCH,c}(i)$ denotes transmit power of a PUCCH in a subframe i of a serving cell c, $w_1(i)$ denotes a scaling factor of $P_{PUCCH,c}(i)$, $P_{SRS,c}(i)$ denotes transmit power of an SRS in the subframe i of the serving cell c, $w_2(i)$ denotes a scaling factor of $P_{SRS,c}(i)$, and $P_{CMAX,c}(i)$ denotes maximum transmit power configured in the subframe i of the serving cell c. Herein, $0 \le w_1(i) \le 1$ and $0 \le w_2(i) \le 1$. At least one PUCCH and at least one SRS can be transmitted in the subframe i.

Through the scheduling, the transmit power of the PUCCH can be readjusted to $w_1(i)P_{PUCCH,c}(i)$, and the transmit power of the SRS can be readjusted to $w_2(i)P_{SRS,c}(i)$.

When a total transmit power of the PUCCH and the SRS exceeds maximum transmit power, transmit power of a signal having a low priority can be decreased by using a priority rule descried below.

In one embodiment, the PUCCH may have a higher priority than the SRS. That is, $w_1(i) > w_2(i) \ge 0$. This is because the PUCCH can carry a control signal (e.g., HARQ ACK/NACK) which can have a serious effect on communication reliability. Transmission delay of the HARQ ACK/NACK may cause delay of DL data, and thus quality of service (QoS) may not be guaranteed.

In this case, the value $w_1(i)$ can be maintained to 1 until the value $w_2(i)$ becomes a value less than a specific value (i.e., 1) or becomes 0. That is, the PUCCH transmit power may not be decreased as long as the SRS transmit power can be decreased. In addition, the value $w_2(i)$ may have the same value irrespective of a serving cell. That is, a ratio of decreasing the SRS transmit power may be identical throughout all serving cells.

In another embodiment, the SRS may have a higher priority than the PUCCH. That is, $w_2(i) > w_1(i) \ge 0$. This is because, if SRS transmit power is low, a BS cannot correctly measure a pathloss of a UE and thus may not be able to perform correct scheduling.

In this case, the value $w_2(i)$ can be maintained to 1 until the value $w_1(i)$ becomes a value less than a specific value (i.e., 1) or becomes 0. That is, the SRS transmit power may not be decreased as long as the PUCCH transmit power can be decreased.

In another embodiment, the SRS may have the same priority as the PUCCH. That is, $w_2(i)=w_1(i)$.

Meanwhile, the PUSCH may be transmitted in the same subframe simultaneously with the PUCCH, or simultaneous transmission may not be allowed.

If the PUCCH and the SRS are simultaneously triggered in a mode not allowing PUSCH/PUCCH simultaneous transmission, SRS transmission may be dropped. Alternatively, by applying a 'shortened format' to the PUCCH, the PUCCH and the SRS can be prevented from simultaneously transmission in the same OFDM symbol.

The aforementioned SRS/PUCCH simultaneous transmission can be applied in a mode allowing PUSCH/PUCCH simultaneous transmission.

<Second embodiment: Transmission of SRS and PUSCH>

The SRS and the PUSCH can be simultaneously transmitted in the same serving cell or in the same subframe of different serving cells.

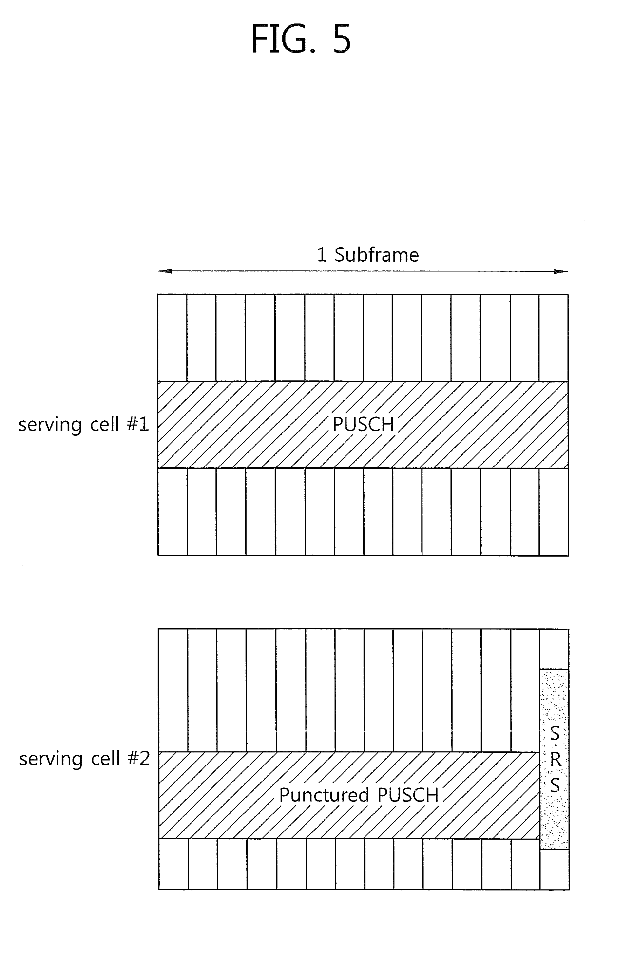

FIG. 5 shows an example of transmission of an SRS and a PUSCH.

The PUSCH is transmitted in a serving cell #1. The PUSCH and the SRS are transmitted in a serving cell #2. The PUSCH is punctured in a last OFDM symbol of a subframe of the serving cell #2 in which the SRS is transmitted. However, the PUSCH is not punctured in a last OFDM symbol of a subframe of the serving cell #1.

This is to avoid a data loss caused when the PUSCH is punctured in another serving cell except for the serving cell in which the SRS is transmitted, even if a single-carrier property is not satisfied.

The puncturing of the PUSCH applies only to the serving cell in which the SRS is transmitted. The puncturing of the PUSCH is not performed in a serving cell in which the SRS is not transmitted.

When total transmit power of the PUSCH and the SRS exceeds maximum transmit power, the following operation can be taken into account.

First, transmit power of the PUSCH can be preferentially decreased. This is because a decrease in transmit power of the SRS may cause a serious error in UL channel estimation performed by a BS. Alternatively, if the total transmit power of the PUSCH and the SRS exceeds the maximum transmit power, only the SRS may be transmitted while dropping PUSCH transmission. Alternatively, if the total transmit power of the PUSCH and the SRS exceeds the maximum transmit power, the PUSCH transmission may be dropped when transmit power of the PUSCH is less than or equal to a specific value.

Second, the transmit power of the SRS can be preferentially decreased. Alternatively, only the PUSCH may be transmitted while dropping SRS transmission.

Third, power of the SRS and the PUSCH can be decreased by the same ratio.

Examples of the PUSCH may include a PUSCH including only user data and a PUSCH in which an uplink control signal and the user signal are multiplexed (such a PUSCH is called a multiplexed PUSCH). The top priority may be assigned to the multiplexed PUSCH, and transmit power can be regulated by assigning the same priority or different priorities to the PUSCH and the SRS.

<Third embodiment: PUSCH/PUCCH/SRS transmission>

Multiplexing of a UL channel (PUSCH and/or PUCCH) and an SRS will be proposed.

First, assume that a UE is set to a mode allowing simultaneous transmission of the PUSCH and the PUCCH. The PUSCH, the PUCCH, and the SRS can be transmitted simultaneously.

Total transmit power of the PUSCH, the PUCCH, and the SRS can be regulated as follows, so that it does not exceed maximum transmit power.

[Equation 2]

$$\left\{ w_1(i)P_{PUCCH,c}(i) + w_2(i)P_{mPUSCH,c}(i) + w_3(i)\sum_c P_{PUSCH,c}(i) + w_4(i)\sum_c P_{SRS,c}(i) \right\} \leq P_{CMAX,c}(i)$$

Herein, $P_{mPUSCH,c}(i)$ denotes transmit power of a multiplexed PUSCH in a subframe i of a serving cell c, and $P_{PUSCH,c}(i)$ denotes transmit power of a PUSCH in the subframe i of the serving cell c. $w_1(i)$ denotes a scaling factor of $P_{PUCCH,c}(i)$. $w_2(i)$ denotes a scaling factor of $P_{mPUSCH,c}(i)$. $w_3(i)$ denotes a scaling factor of $P_{PUSCH,c}(i)$. $w_4(i)$ denotes a scaling factor of $P_{SRS,c}(i)$.

Through the scheduling, the transmit power of the PUCCH can be readjusted to $w_1(i)P_{mPUSCH,c}(i)$, the transmit power of the multiplexed PUSCH can be readjusted to $w_2(i)P_{mPUSCH,c}(i)$, and the transmit power of the PUSCH can be readjusted to $w_3(i)P_{mPUSCH,c}(i)$.

If the total transmit power exceeds the maximum transmit power, transmit power of the SRS can be preferentially decreased or SRS transmission can be dropped. If the total transmit power exceeds the maximum transmit power even though the transmit power of the SRS is decreased to be less than or equal to a specific value or is set to 0, the transmit power of the PUSCH can be decreased or PUSCH transmission can be dropped.

In this case, transmit power of a PUSCH not multiplexed with the control signal can be preferentially decreased or dropped. Alternatively, irrespective of whether it is the PUCCH multiplexed with the control signal, transmit power of all PUSCHs can be decreased by the same ratio or can be dropped. If the transmit power of the PUSCH exceeds the maximum transmit power even though the aforementioned method is used, the transmit power of the PUCCH can be decreased. That is, a power scaling priority is given as follows.

$$w_1(i) > w_2(i) > w_3(i) > w4(i) \text{ or } w_1(i) > w_2(i) = w_3(i) > w_4(i)$$

Alternatively, if the total transmit power exceeds the maximum transmit power, the transmit power of the SRS and the PUSCH not multiplexed with the control signal can be preferentially decreased by the same ratio or transmission thereof can be dropped. If the total transmit power exceeds the maximum transmit power even though the transmit power of the PUSCH not multiplexed with the control signal and the SRS is decreased to be less than or equal to a specific value or is set to 0, the transmit power of the PUSCH multiplexed with the control signal can be decreased or transmission thereof can be dropped. Alternatively, without having to distinguish the PUSCH multiplexed with the control signal and the PUSCH not multiplexed with the control signal, transmit power can be decreased by the same ratio as the SRS or transmission thereof can be dropped. If the transmit power of the PUSCH exceeds the maximum transmit power even though the aforementioned method is used, the transmit power of the PUCCH can be decreased or PUSCH transmission can be dropped. That is, a power scaling priority is given as follows.

$$w_1(i) > w_2(i) > w_3(i) = w4(i) \text{ or } w_1(i) > w_2(i) = w_3(i) = w_4(i)$$

If the total transmit power exceeds the maximum transmit power, the transmit power of the PUSCH can be preferentially decreased or PUSCH transmission can be dropped. If the total transmit power exceeds the maximum transmit power even though the transmit power of the PUSCH is decreased to be less than or equal to a specific value or is set to 0, the transmit power of the SRS can be decreased or SRS transmission can be dropped. If the transmit power of the PUSCH exceeds the maximum transmit power even though the aforementioned method is used, the transmit power of the PUCCH can be decreased. That is, a power scaling priority is given as follows.

$$w_1(i) > w_4(i) > w_2(i) = w_3(i)$$

If the total transmit power exceeds the maximum transmit power, the transmit power of the PUSCH not multiplexed with the control signal can be preferentially decreased or transmission thereof can be dropped. If the total transmit power exceeds the maximum transmit power even though the transmit power of the PUSCH is decreased to be less than or equal to a specific value or is set to 0, the transmit power of the SRS can be decreased or SRS transmission can be dropped. If the total transmit power exceeds the maximum transmit power even though the aforementioned method is used, the transmit power of the PUCCH can be decreased or transmission thereof can be dropped. If the transmit power of the PUSCH exceeds the maximum transmit power even though the aforementioned method is used, the transmit power of the PUCCH can be decreased. That is, a power scaling priority is given as follows.

$$w_1(i) > w_2(i) > w_4(i) > w_3(i)$$

In the above description, if the maximum transmit power is satisfied by decreasing the transmit power of the PUSCH and the SRS, the remaining transmit power can be re-assigned to the PUSCH or the SRS.

In addition, if the PUCCH and the SRS are not simultaneously transmitted, the above operation can be applied except for the PUCCH and the $w_1(i)$.

<4th embodiment: Drop one of SRS and PUCCH>

First, if an aperiodic SRS collides with an SR (i.e., a PUCCH format 1), only the aperiodic SRS can be transmitted while dropping SRS transmission.

The aperiodic SRS may collide with HARQ ACK/NACK (i.e., PUCCH format 1a/1b) in the following manner. The HARQ ACK/NACK can be classified into SPS ACK/NACK for semi-persistent scheduling (SPS) and dynamic ACK/NACK for dynamic scheduling. The SPS ACK/NACK is transmitted by using a pre-defined PUCCH resource. The PUCCH resource can be reported by a BS to a UE through an RRC message. The dynamic ACK/NACK is transmitted by using a PUCCH resource acquired from a resource of a PDCCH for carrying a DL grant.

If the SRS ACK/NACK collides with the aperiodic SRS, only the aperiodic SRS is transmitted while dropping the SPS ACK/NACK transmission. This is because it can be seen that the BS intentionally allows the SPS ACK/NACK and the aperiodic SRS to collide with each other. If the aperiodic SRS collides with the dynamic ACK/NACK, the dynamic ACK/NACK is transmitted, and the aperiodic SRS is dropped.

Now, a collision of a CQI and an SRS will be described.

In the conventional 3GPP LTE, the SRS is dropped if a periodic SRS and a periodic CQI (i.e., a PUCCH format 2) are triggered in the same subframe.

However, since the aperiodic SRS is an operation in which a BS requests SRS transmission at a corresponding time when necessary, it may not be appropriate to drop the SRS. The present proposal can be applied when a UE transmits an aperiodic SRS (also referred to as A-SRS) and CQI in one serving cell, or simultaneously transmits the aperiodic SRS and CQI in a plurality of serving cells.

Since the aperiodic SRS is introduced so that the BS can perform faster UL channel measurement of the UE, it is not desired to drop the SRS when it collides with the CQI.

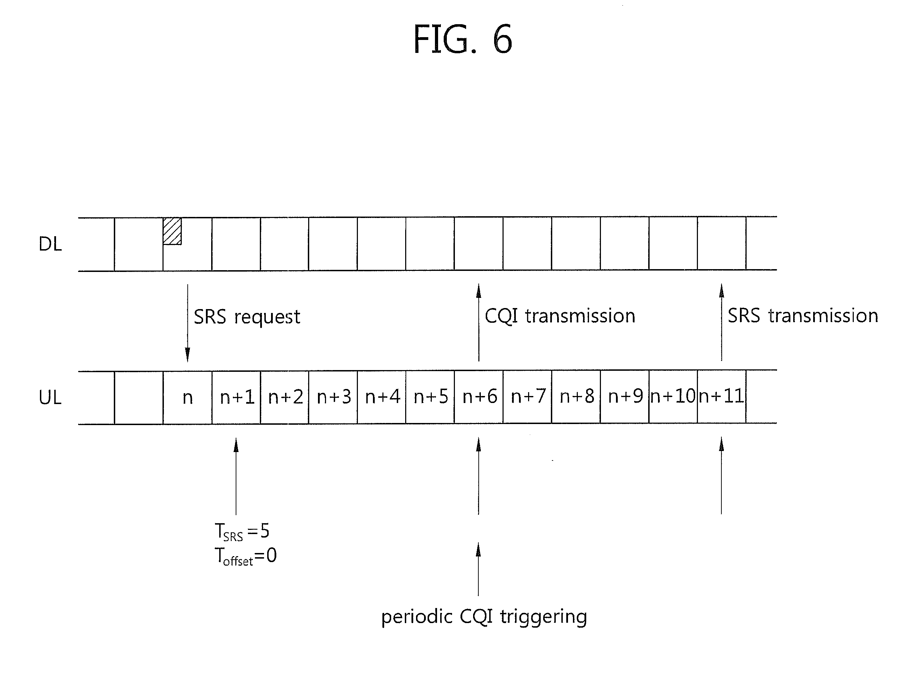

FIG. 6 shows an example of resolving a collision of an SRS and a CQI.

After detection of a positive SRS request, a UE can transmit the SRS in a first subframe which satisfies an SRS configuration and which does not collide with periodic CQI transmission.

Assume that $T_{SRS}=5$ and $T_{offset}=0$. When an SRS request is detected on a PDCCH of a subframe n, a first subframe which satisfies the SRS configuration after a subframe n+4 is a subframe n+6. However, a periodic CQI is triggered even in the subframe n+6, and thus the collision of the CQI and the SRS occurs.

In the subframe n+6, the SRS is dropped, and only the CQI is transmitted. The SRS is transmitted in a subframe n+11 which is a first subframe of a next SRS period which does not collide with a CQI period.

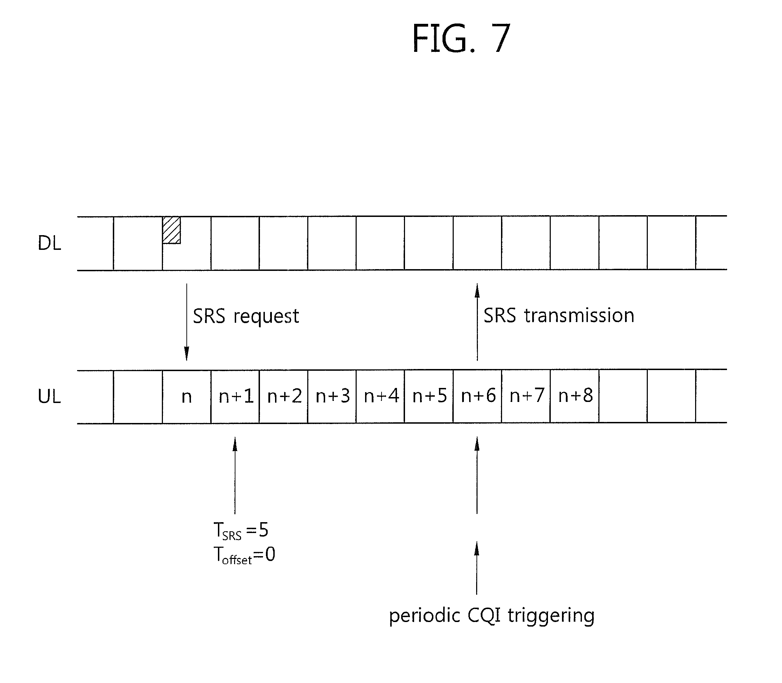

FIG. 7 shows another example of resolving a collision of an SRS and a CQI.

After detection of a positive SRS request, if a subframe in which the SRS is triggered is the same as a subframe in which a periodic CQI is transmitted, a UE can drop periodic CQI transmission and transmit the SRS.

Assume that $T_{SRS}$=5 and $T_{offset}$=0. When an SRS request is detected on a PDCCH of a subframe n, a first subframe which satisfies the SRS configuration after a subframe n+4 is a subframe n+6. However, a periodic CQI is triggered even in the subframe n+6, and thus the collision of the CQI and the SRS occurs. The UE drops the CQI, and transmits the SRS. The CQI dropped in this case is a periodic CQI transmitted with a PUCCH format 2. If the CQI is transmitted through a PUSCH, the CQI may not be dropped.

When the periodic CQI is triggered in the subframe n+6, ACK/NACK can be multiplexed with the CQI. That is, not the PUCCH format 2 but the PUCCH formats 2a/2b can collide with an aperiodic SRS. If the PUCCH format 2 collides with the aperiodic SRS, the PUCCH format 2 is dropped. If the PUCCH formats 2a/2b collide with the aperiodic SRS, the SRS is dropped. That is, if transmission of the CQI multiplexed with the ACK/NACK is triggered, the SRS is dropped.

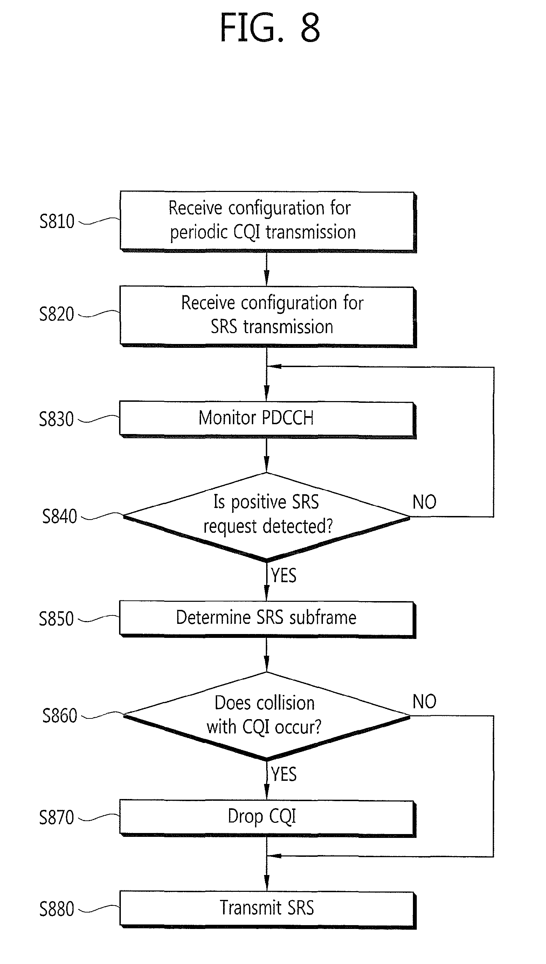

FIG. 8 is a flowchart showing an SRS transmission method according to the embodiment of FIG. 7.

A UE receives a CQI configuration for periodic CQI transmission from a BS (step S810). The CQI configuration may include a CQI period and a CQI subframe offset. In addition, the CQI configuration may include information related to a PUCCH resource for configuring a PUCCH format 2.

The UE receives the SRS configuration for SRS transmission from the BS (step S820). The SRS configuration may include an SRS period and an SRS subframe offset. The UE may receive a plurality of SRS configurations. One of the plurality of SRS configurations can be selected by a positive SRS request.

The UE monitors a PDCCH (step S830). The PDCCH can be monitored in a UE-specific search space.

The UE determines whether a positive SRS request is detected (step S840). A DL grant or UL grant of the PDCCH may include an SRS request. The SRS request may have one bit or two bits.

Upon detection of the positive SRS request, the UE determines an SRS subframe in which SRS transmission is triggered (step S850).

The UE determines whether the SRS collides with the CQI in the SRS subframe (step S860). The UE determines whether the periodic CQI is triggered in the SRS subframe.

If the periodic CQI is triggered in the SRS subframe, the CQI is dropped (step S870).

The UE transmits the SRS in the SRS subframe (step S870).

Meanwhile, in another embodiment, if the aperiodic SRS collides with the CQI, transmission may be performed with a 'shortened format' instead of the PUCCH format 2. The 'shortened format' is a format acquired by puncturing an OFDM symbol corresponding to a sounding reference symbol in the PUCCH format 2.

If the aperiodic SRS collides with the CQI, the SRS may be dropped and only the CQI may be transmitted. Alternatively, the BS may indicate whether to simultaneously transmit the CQI and the SRS. An indicator for indicating whether to perform simultaneous transmission may be transmitted by the BS to the UE through a PDCCH or an RRC message.

The UE may ignore a PDCCH used to detect the SRS request which collides with CQI transmission. That is, even if the PDCCH includes a DL grant or a UL grant, it may not be used by being determined as wrong scheduling. In other words, it can be assumed that the SRS request which collides with the CQI transmission cannot be received through the PDCCH.

When the SRS is transmitted simultaneously with the PUSCH and/or the PUCCH, dropping can be allowed only when the SRS and the UL channel (i.e., the PUSCH and/or the PUCCH) are transmitted in the same antenna port. When transmitted to another antenna port, the SRS and the UL channels can be both transmitted. Assume that SRS transmission for a plurality of antenna ports is configured. If the UL channel and the SRS transmission are triggered in the same subframe, the SRS may be dropped in an antenna port used by the UL channel, and the SRS can be transmitted in another antenna port.

Assume a case where UL CCs are grouped so that an SRS included in one UL CC and an SRS (or a PUCCH or a PUSCH) included in another UL CC are transmitted together. If two UL CCs belong to the same UL CC group, transmission of one of the two UL CCs can be dropped. If the two UL CCs belong to different groups, two channels can be both transmitted. The UL CCs can be grouped to a UL CC belonging to the same frequency band.

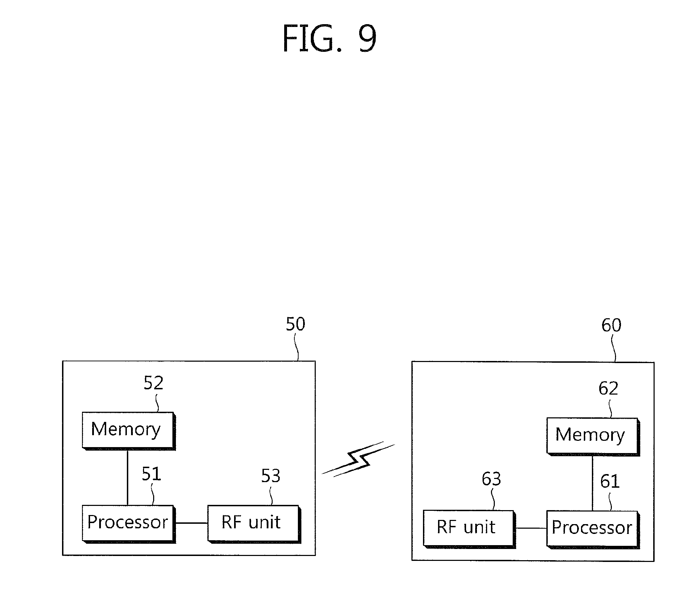

FIG. 9 is a block diagram showing a wireless communication system to implement embodiments of the present invention.

A BS 50 includes a memory 51, a processor 52, and a radio frequency (RF) unit 53. The memory 51 is coupled to the processor 52, and stores a variety of information for driving the processor 52. The RF unit 53 is coupled to the processor 52, and transmits and/or receives a radio signal. The processor 52 implements the proposed functions, procedures, and/or methods. The processor 52 can implement an operation of the BS 50 according to the aforementioned embodiments. The processor 52 schedules an SRS configuration, and estimates a channel state on the basis of a received SRS.

A UE 60 includes a memory 61, a processor 62, and an RF unit 63. The memory 61 is coupled to the processor 62, and stores a variety of information for driving the processor 62. The RF unit 63 is coupled to the processor 62, and transmits and/or receives a radio signal. The processor 62 implements the proposed functions, procedures, and/or methods. The processor 62 can implement an operation of the UE 60 according to the aforementioned embodiments. The processor 62 determines whether an SRS collides with a PUCCH and/or a PUSCH, and transmits the SRS.

The processor may include Application-Specific Integrated Circuits (ASICs), other chipsets, logic circuits, and/or data processors. The memory may include Read-Only Memory (ROM), Random Access Memory (RAM), flash memory, memory cards, storage media and/or other storage devices. The RF unit may include a baseband circuit for processing a radio signal. When the above-described embodiment is implemented in software, the above-described scheme may be implemented using a module (process or function) which performs the above function. The module may be stored in the memory and executed by the processor. The memory may be disposed to the processor internally or externally and connected to the processor using a variety of well-known means.

In the above exemplary systems, although the methods have been described on the basis of the flowcharts using a series of the steps or blocks, the present invention is not limited to the sequence of the steps, and some of the steps may be performed at different sequences from the remaining steps or may be performed simultaneously with the remaining steps. Furthermore, those skilled in the art will understand that the steps shown in the flowcharts are not exclusive and may include other steps or one or more steps of the flowcharts may be deleted without affecting the scope of the present invention.

**Claims**

1. A method of transmitting a sounding reference signal in a wireless communication system, the method comprising:

   receiving, by a user equipment, a configuration for periodic channel quality indicator (CQI) transmission from a base station;
   receiving, by the user equipment, a configuration for sounding reference signal (SRS) transmission from the base station;
   monitoring, by the user equipment, a physical downlink control channel (PDCCH) in order to detect a positive SRS request;
   upon detecting the positive SRS request, determining a SRS subframe which satisfies the configuration for SRS transmission; and
   if a periodic CQI is also triggered in the SRS subframe, transmitting a SRS in the SRS subframe to the base station.

2. The method of claim 1, wherein the periodic CQI is not transmitted in the SRS subframe.

3. The method of claim 2, wherein the configuration for SRS transmission includes a SRS periodicity and a SRS subframe offset, and the configuration for periodic CQI transmission includes a CQI periodicity and a CQI subframe offset.

4. The method of claim 3, wherein the SRS subframe is determined as a first subframe which satisfies the configuration for SRS transmission and n+k, where $k \geq 4$, when the positive SRS request is detected in a subframe *n*.

5. The method of clam 2, wherein the periodic CQI is not multiplexed with a hybrid automatic repeat request (HARQ) ACK/NACK.

6. The method of claim 5, wherein the periodic CQI is transmitted on a physical uplink control channel (PUCCH).

7. The method of claim 5, further comprising:

   if a periodic CQI multiplexed with the HARQ ACK/NACK is triggered in the SRS subframe, transmitting the multiplexed CQI in the SRS subframe to the base station.

8. The method of claim 7, wherein the multiplexed CQI is transmitted on a PUCCH.

9. A user equipment configured for transmitting a sounding reference signal in a wireless communication system, the user equipment comprising:

a radio frequency unit configured to transmit a radio signal; and
a processor operatively coupled with the radio frequency unit and configured to:

receive a configuration for periodic channel quality indicator (CQI) transmission from a base station;
receive a configuration for sounding reference signal (SRS) transmission from the base station;
monitor a physical downlink control channel (PDCCH) in order to detect a positive SRS request;
upon detecting the positive SRS request, determine a SRS subframe which satisfies the configuration for SRS transmission; and
if a periodic CQI is also triggered in the SRS subframe, transmit a SRS in the SRS subframe to the base station.

10. The user equipment of claim 9, wherein the periodic CQI is not transmitted in the SRS subframe.

11. The user equipment of claim 10, wherein the configuration for SRS transmission includes a SRS periodicity and a SRS subframe offset, and the configuration for periodic CQI transmission includes a CQI periodicity and a CQI subframe offset.

12. The user equipment of claim 11, wherein the SRS subframe is determined as a first subframe which satisfies the configuration for SRS transmission and n+k, where k≥4, when the positive SRS request is detected in a subframe *n*.

13. The user equipment of clam 10, wherein the periodic CQI is not multiplexed with a hybrid automatic repeat request (HARQ) ACK/NACK.

14. The user equipment of claim 13, wherein the processor is configured to transmit a multiplexed CQI which is multiplexed with the HARQ ACK/NACK in the SRS subframe to the base station if the multiplexed CQI is triggered in the SRS subframe.

15. The user equipment of claim 14, wherein the multiplexed CQI is transmitted on a physical uplink control channel.

# FIG. 1

# FIG. 2

| | m=1 | m=0 |
|---|---|---|
| Control region | m=3 | m=2 |
| Data region | | |
| Control region | m=2 | m=3 |
| | m=0 | m=1 |

1st slot | 2nd slot

Subframe

Freq.

Time

# FIG. 3

DL CC #1   DL CC #2   DL CC #3

Control region

DL subframe

Data region

UL CC #1   UL CC #2

UL subframe

CI=0        CI=1        CI=2

# FIG. 4

EP 2 634 939 A2

DL

SRS request

SRS transmission

UL

| n | n+1 | n+2 | n+3 | n+4 | n+5 | n+6 | n+7 | n+8 | n+9 |

subframe

$T_{SRS} = 5$
$T_{offset} = 0$

# FIG. 5

# FIG. 6

# FIG. 7

DL

SRS request → ... SRS transmission

UL | | | n | n+1 | n+2 | n+3 | n+4 | n+5 | n+6 | n+7 | n+8 | | | |

$T_{SRS} = 5$
$T_{offset} = 0$

periodic CQI triggering

EP 2 634 939 A2

# FIG. 8

S810 — Receive configuration for periodic CQI transmission

S820 — Receive configuration for SRS transmission

S830 — Monitor PDCCH

S840 — Is positive SRS request detected? — NO

YES

S850 — Determine SRS subframe

S860 — Does collision with CQI occur? — NO

YES

S870 — Drop CQI

S880 — Transmit SRS

# FIG. 9